# EUROPÄISCHE PATENTSCHRIFT

(11) **EP 1 060 874 B1**
(45) Veröffentlichungstag und Bekanntmachung des Hinweises auf die Patenterteilung: **11.02.2004**
(21) Anmeldenummer: 00111870.2
(22) Anmeldetag: 09.06.2000
(51) Int. Cl.: B32B 15/01, B32B 3/24

(54) **Mehrschichtverbundplatte mit Lochblechzwischenlage und Verfahren zur Herstellung von Mehrschichtverbundplatten**
Multilayer composite plate with a perforated plate as an intermediate layer and method of making multilayer composite plates
Plaque composite multicouche avec une plaque perforée comme couche intermediaire et procédé de fabrication de plaques composites multicouches

(30) Priorität: 16.06.1999 DE 19927337
(43) Veröffentlichungstag der Anmeldung: 20.12.2000
(73) Patentinhaber: DaimlerChrysler AG, 70567 Stuttgart (DE)
(72) Erfinder: Eipper, Konrad, 72108 Rottenburg (DE); Gerick, Arndt, 89075 Ulm (DE); Lempenauer, Klaus, Dr., 89075 Ulm (DE)

(56) Entgegenhaltungen:
- EP-A- 0 636 517
- DE-A- 3 809 767
- DE-A- 3 935 120
- US-A- 3 770 560
- PATENT ABSTRACTS OF JAPAN vol. 017, no. 080 (M-1368), 17. Februar 1993 (1993-02-17) -& JP 04 279343 A (YOKOHAMA RUBBER CO LTD:THE;OTHERS: 01), 5. Oktober 1992 (1992-10-05)

## Beschreibung

Die Erfindung bezieht sich auf Mehrschichtverbundplatten nach dem Oberbegriff des Patentanspruchs 1 und auf ein Verfahren zur Herstellung von Mehrschichtverbundplatten nach dem Oberbegriff des Patentanspruchs 8.

Mehrschichtverbundplatten und Verfahren zur Herstellung von Mehrschichtverbundplatten finden im Leichtbau ein breites Anwendungsgebiet. Vor allem in der Verkehrstechnik werden spezifisch leichte Werkstoffe, wie beispielsweise Aluminium oder Faserverbundkunststoffe oder auch hochfeste Karosseriestähle, bevorzugt eingesetzt. Allerdings kann durch den Einsatz von immer festeren Werkstoffen mit zunehmend dünneren Blechstärken zwar die Festigkeitsanforderung erfüllt werden, nicht jedoch die Steifigkeit. Leichtbau stößt vor allem dort an Grenzen, wo geometrisch bedingt durch reduzierte Querschnitte die Bauteilsteifigkeit den Anforderungen nicht mehr genügt.
Eine Lösung bieten geometrische Versteifungen bei niedrigem Flächengewicht, die sogenannte hohe spezifische Steifigkeit. Derartige Mehrschichtverbunde sind bereits in vielfältigen Varianten als Stegbleche, Höcker- und Trapez-Verbundbleche bekannt, bei denen verschiedene, durch Umformung hergestellte Geometrien mit einer innenliegenden stützenden Zwischenlage die Grundlage für technische Lösungen im Leichtbau bilden. Als Zwischenlage eignen sich auch Schaumkernfüllungen mit polymeren Schäumen oder auch metallische Schäume, bis hin zu Kieselgurfüllungen.
Bevorzugte technische Anwendungen findet heute vor allem ein dreischichtiger Werkstoffverbund aus zwei Stahldeckblechen und einer Zwischenlage aus viskoelastischem Material. Diese Art von Verbundblechen werden aufgrund ihrer relativ dünnen Zwischenlage, die auch kaum zur Steifigkeitserhöhung beiträgt, hauptsächlich wegen ihrer schwingungsdämpfenden Eigenschaften herangezogen.

Aus der DE 39 35 120 C2 ein Verfahren zur Herstellung von Mehrschichtverbundplatten bekannt, die aus einer Deck- und Bodenplatte und dazwischenliegend aus einem Stegmaterial aus Draht besteht, das an den Gitterknotenpunkten verschweißt oder verklebt wird. Zwar werden im Verfahrensablauf gegebenenfalls die Gitterknotenpunkte der Zwischenlage flach gewalzt, wobei sich eine größere Auflagefläche zur Deck- und Bodenplatte ausbildet, jedoch können insbesondere die Verbindungsstellen in weit von der neutralen Ebene entfernten Positionen bei einer Umformung dennoch zu stark durch Schubkräfte beansprucht werden und dabei reißen. Sobald im Umformprozeß derart beschädigte Verbindungsstellen auch nur geringfügig auseinanderdriften, werden diese bei flächenhaften Klebern auch durch weitere Prozeßschritte nicht mehr verbunden. Als Faustregel gilt dabei für die Umformbarkeit, daß je höher die sog. gewichtsspezifische Steifigkeit einer Struktur ist, desto enger sind die Grenzen, aus einer ebenen Verbundstruktur ein gekrümmtes Bauteil zu formen. Dies gilt prinzipiell auch für Gitter- und Streckmetallverbunde, wo durch das Zusammendrücken der Zwischenlage beim umformen, das Durchprägen der Zwischenlagenstruktur auf die Deckbleche bis hin zum Aufreißen der Deckbleche der Grad der Umformbarkeit beschränkt ist.

In der nicht vorveröffentlichten Patentanmeldung DE 198 39 931 ist ein Klebeverfahren zur Herstellung von Mehrschichtverbundplatten beschrieben, bei dem die Umformbarkeit der Verbundstruktur durch einen nur teilweise gehärteten Kleber verbessert wird und die Klebemasse erst nach dem Umformen vollständig ausgehärtet wird..

Bei den in der Schrift EP 0 636 517 B1 durch ein Herstellungsverfahren beschriebenen komplexeren Strukturen werden die einzelnen Schichten in Mehrschichtverbundplatten mit Dämmschichtzwischenlage mit Hilfe eines Klebers fixiert und gemeinsam umgeformt. Der Schwerpunkt liegt hier besonders auf dem gezielten Umformen von Fahrzeugkarosserieteilen, bei denen mit partiell angebrachten Schweiß- oder Klebeverbindungen ein gewünschtes Umformverhalten erzielt wird und dabei erst in zweiter Linie ein Erreichen möglichst hoher Steifigkeit angestrebt wird. Aber auch in diesem Fall weisen die Mehrschichtverbundplatten die bereits genannten Nachteile auf. Generell weisen bisherige steifigkeitserhöhende Verbundbleche entweder mangelnde Steifigkeit bei ausreichendem Umformvermögen oder zu geringe Umformbarkeit bei hoher Steifigkeit auf.

DE-A-38 09 767 beschreibt eine aus zwei miteinander verklebten Lochmetallplatten bestehende Verbundplatte. Die Lochöffnungen überdecken sich nicht, die Verbindung erfolgt insbesondere mit Polyester- oder Epoxydharz. Ein thermisches Härten oder Aufschäumen des Harzes ist nicht erwähnt.

Der Erfindung liegt die Aufgabe zugrunde, eine der Umformung zugängliche Mehrschichtverbundplatte sowie ein Verfahren zur Herstellung derselben anzugeben, wodurch in ihrer Materialeigenschaft optimale Steifigkeit in Verbindung mit Korrosionsschutz und einer Schwingungs- und Schalldämpfung erreicht wird.

Die Erfindung wird in Bezug auf die Anordnung durch die Merkmale der Patentansprüche 1 und 2 und in Bezug auf das Verfahren durch die Merkmale der Patentansprüche 8 und 9 wiedergegeben. Die weiteren Ansprüche enthalten vorteilhafte Aus- und Weiterbildungen der Erfindung.

Die Erfindung ermöglicht die Darstellung von leichten und umformbaren Mehrschichtverbundplatten, welche aus zwei Metalltafeln aufgebaut ist Die Metalltafeln bestehen aus gelochten Blechen, wobei im Verbund die Löcher benachbarter Bleche nicht übereinanderliegen oder sich nicht überlappen, wobei sich zwischen ihnen thermisch aushärtbarer und aufschäumbarer Kleber befindet.

Mehrschichtverbundplatten, welche aus mehr als zwei äußeren Metalltafeln als Deckel- und Bodenplatte bestehen, sind mit einer Zwischenlage verbunden. Diese Zwischenlage besteht aus gelochten Blechen, wobei die Deckel- oder Bodenplatte gelocht oder nicht gelocht sind. Wiederum sind die Löcher der benachbarten Bleche nicht übereinanderliegend oder überlappend.

Die Löcher der Bleche besitzen eine kreisrunde, ovale oder vieleckige Gestalt. Der Flächenanteil der Löcher eines Bleches liegt vorzugsweise zwischen 40 bis 65%.

Die Bleche sind entweder nur an der gemeinsamen Berührungsfläche verklebt oder es wird der gesamte verbleibende Hohlraum durch die Klebemasse ausgefüllt. Der Kleber bzw. die Klebemasse ist aufschäumend.

Das Verfahren zur Herstellung von Mehrschichtverbundplatten beinhaltet, daß im Falle des Klebens zwischen die zu verbindenden Lagen Kleber eingebracht und der Kleber einer thermischen Behandlung unterzogen wird. Durch die thermische Behandlung wird der Kleber entweder vollständig oder teilweise ausgehärtet. Ein teilweise ausgehärtete Kleber wird erst nach einem Umformvorgang der Mehrschichtverbundplatten durch eine weitere thermische Behandlung vollständig ausgehärtet.

Ein besonderer Vorteil der Erfindung besteht in der exzellenten Umformbarkeit der mehrlagigen Verbundstruktur. Innerhalb des Werkstücks sorgt ein fließender Spannungsübergang für zusätzliche vorteilhafte Werkstoffeigenschaften der durch die Umformung gebildeten hochsteifen Struktur im Gebrauchszustand. Eine mehrschichtigen Aufbau der Zwischenlage ermöglicht eine große Aufbauhöhe des Sandwiches von mehreren Millimetern bis Zentimetern bei niedrigem spezifischen Gewicht. Da infolge der Übertragung der Schubspannung diese Aufbauhöhe mit der 3. Potenz zur Gesamtsteifigkeit beiträgt, wird gewichtsspezifisch eine hohe Steifigkeit des Gesamtverbundes erzielt. Zudem wird durch eine Auskleidung der innenliegenden Metalloberfläche durch den aufschäumenden Kleber ein wirkungsvoller Schutz vor Korrosion bewirkt. Ein weiterer Vorteil ergibt sich aus einer Verbesserung im Dämpfungsverhalten von Schall und Vibration und bezüglich der thermischen Dämmung.

Im folgenden wird die Erfindung anhand von vorteilhaften Ausführungsbeispielen unter Bezugnahme auf schematische Zeichnungen in den Figuren näher erläutert. Es zeigen:
- Fig. 1: Prinzipieller Aufbau einer Mehrschichtverbundplatte mit zwei gelochten Metalltafeln (Draufsicht),
- Fig. 2: Querschnitt der zweilagigen Mehrschichtverbundplatte mit dichter Struktur,
- Fig. 3: Vierlagige Mehrschichtverbundplatte mit massiver Deckel- und Bodenplatte,
- Fig. 4: Abhängigkeit des Steifigkeitsverhältnises von der Lochfläche bei variierter Blechdicke.

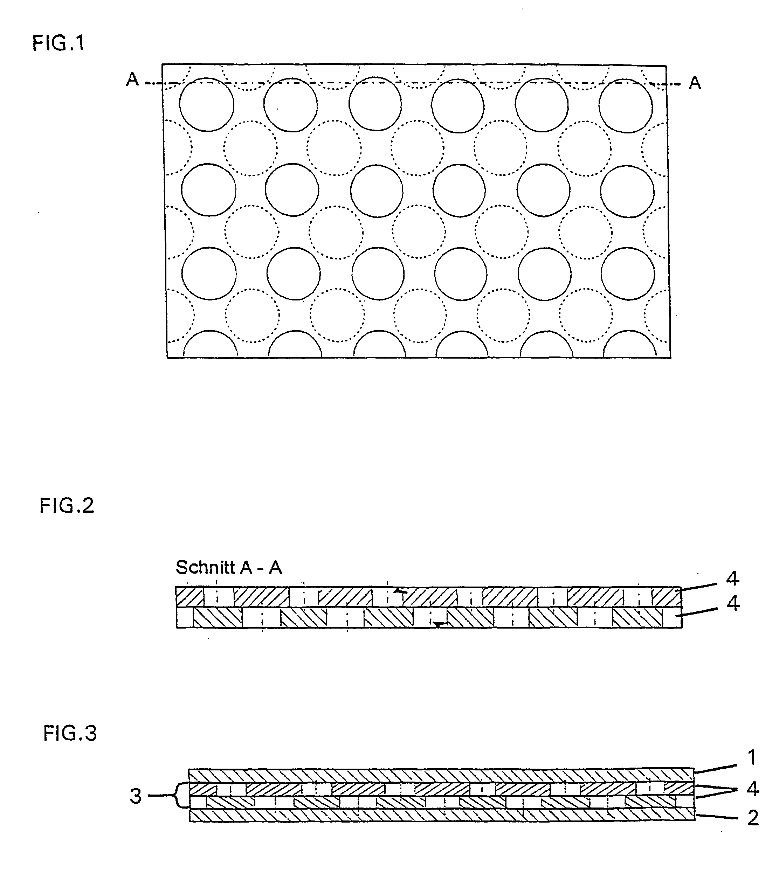

In einem ersten Ausführungsbeispiel gemäß Fig. 1 ist der prinzipielle Aufbau einer Mehrschichtverbundplatte mit zwei gelochten Metalltafeln 4 in der Draufsicht dargestellt. Die kreisförmigen Löcher des oberen und unteren Bleches sind so angeordnet, daß sich diese nicht übereinanderliegen oder überlappen. Aus dem Querschnitt der zweilagigen Mehrschichtverbundplatte ist in Fig. 2 die dichte Struktur aus der versetzten Anordnung der Löcher erkennbar.

Fig. 3 zeigt eine vierlagige Mehrschichtverbundplatte mit massiver Deckel- 1 und Bodenplatte 2. Eine bevorzugte Verwendung beruht auf der breiten Auswahlmöglichkeit des Werkstoffs (z.B. Karosseriestähle, Edelstähle, Aluminiumlegierungen), wodurch die benötigte Variabilität des Materials als Zwischenlage 3 gewährleistet ist. Die Variabilität in der Geometrie und Anzahl der Löcher besitzt nicht zuletzt einen wesentlichen Einfluß auf die Eigenschaften der Verbundstruktur und insbesondere deren Verformbarkeit.

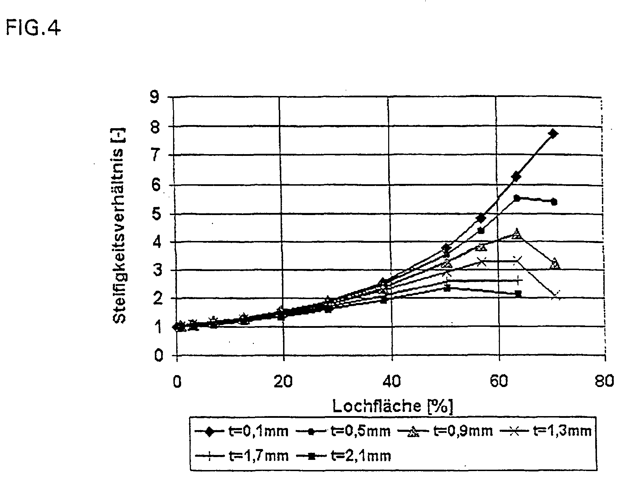

Ein weiterer wesentlicher Bestandteil der Mehrschichtverbundplatte, der ebenfalls das Umformverhalten bestimmt, ist die Anordnung der Löcher. Prinzipiell berechnet sich die Gesamtbiegesteifigkeit aus dem Produkt von axialem Flächenträgteitsmoment I_{A} und dem E-Modul des Verbundes (Dges = I_{A}*E), wobei das Trägheitsmoment eines flächigen Verbundwerkstoffes im wesentlichen von der Verbundaufbauhöhe (I_{A} ∼ h³) bestimmt wird. Dieser Effekt kann dadurch verstärkt werden, daß in die äußeren Bereiche des Sandwiches im Vergleich zu Bereichen entlang der neutralen Faser ein höherer Massenanteil, angeordnet wird, wobei sich der entsprechende Masseanteil aus dem prozentualen Anteil der Löcher eines Bleches bestimmt.
Hieraus folgt, daß eine mittige Blechlage der Zwischenlage 3 in den Bereichen der neutralen Faser einen größeren Anteil von Löchern aufweist, als an den Außenbereichen der Zwischenlage 3, woraus ein gewichtsspezifisch höheres Trägheitsmoment und damit eine zunehmende Steifigkeit resultiert. In Fig. 4 ist beispielhaft das Steifigkeitsverhältnis in Abhängigkeit von der prozentualen Lochfläche für Blechstärken von 0,1 bis 2,1mm Dicke dargestellt. Besonders für Blechdicken um 1mm zeigt sich ein deutliches Maximum für einen Lochfläche von ca. 60%.

Im Herstellungsverfahren werden vorteilhafterweise poröse und aufschäumende Klebstoffsysteme zum Fügen der Verbundstruktur verwendet. Bevorzugte Anwendungen finden pastösen Klebstoffe, die erst während der thermischen Aushärtung entsprechend gleichmäßig aufschäumen. Das Härten des Klebstoffes kann sowohl in einem Schritt als auch in definierten Teilhärteschritten erfolgen. Durch Auslegen des Temperatur/Zeit-Zyklus kann das Umformvermögen der Verbundstruktur beim Aushärten gesteuert werden.

Der Klebstoff füllt die Hohlräume der Verbundstruktur weitgehend aus und bildet damit eine zusätzliche Verankerungsschicht, die bei einer Belastung der Mehrschichtverbundplatte zu einem fließenden Spannungsübergang und demzufolge zu einer höheren Belastbarkeit führt.
Ein Zusatznutzen entsteht, wenn bei Verklebung von korrosionsanfälligen Werkstoffen (z.B. übliche Karosseriestähle) ein Klebstoff verwendet wird, der eine Korrosionsschutzfunktion übernimmt. Das innenseitige Abdecken von Deck- und Bodenblechen durch die Klebemasse und das ganzflächige Umschließen der innenliegenden Struktur verhindert die Korrosion des Gesamtverbundes. Dies ist insbesondere von Bedeutung, wenn die fertige Verbundstruktur Hohlräume aufweist, die durch keine praktikable Korrosionsschutzmaßnahme, wie beispielsweise Verzinken oder Lackieren, nachträglich zu schützen sind. Dabei ist nicht unbedingt erforderlich, daß die Hohlräume vollständig ausgeschäumt werden, sondern lediglich bis zur vollständigen Bedeckung der innenliegenden freien Oberfläche.

Als Werkstoffe finden alle leicht umformbaren Materialien, insbesondere weiche unlegierte Stähle (Tiefziehgüten), aus Korrosionsschutzgründen auch legierte rostfreie Stähle und Aluminium- und Magnesiumlegierungen sowie für spezielle Anwendungen für hohe Temperaturen Titan, Nickel- und Superlegierungen Verwendung.

## Patentansprüche

1. Mehrschichtverbundplatte, welche aus zwei miteinander verklebten Metalltafeln aus gelochten Blechen (4) aufgebaut ist,wobei
- die Löcher benachbarter Bleche (4) nicht übereinanderliegen oder sich überlappen,
- sich zwischen den Platten ein thermisch härtbarer aufschäumender Kleber befindet
- und die Mehrschichtverbundplatte umformbar ist.

2. Mehrschichtverbundplatte, welche aus mehr als zwei äußeren Metalltafeln als Deckel- (1) und Bodenplatte (2) besteht, die über eine Zwischenlage (3) verbunden sind, wobei
- die Zwischenlage (3) aus gelochten Blechen (4) aufgebaut ist,
- die Deckel- (1) und Bodenplatte (2) gelocht oder nicht gelocht sind, wobei die Löcher der benachbarten Bleche nicht übereinanderliegen oder sich nicht überlappen,
- sich zwischen den Platten ein thermisch härtbarer aufschäumender Kleber befindet
- und die Mehrschichtverbundplatte umformbar ist.

3. Mehrschichtverbundplatte nach Anspruch 1 oder 2, **dadurch gekennzeichnet, daß** die Löcher der Bleche (4) eine kreisrunde, ovale oder vieleckige Gestalt besitzen.

4. Mehrschichtverbundplatte nach Anspruch 1 oder 2, **dadurch gekennzeichnet, daß** der aufschäumende Kleber teilweise ausgehärtet ist.

5. Mehrschichtverbundplatte nach Anspruch 1, 2, 3 oder 4, **dadurch gekennzeichnet, daß** der Flächenanteil der Löcher eines Bleches (4) vorzugsweise zwischen 40 bis 65% beträgt.

6. Mehrschichtverbundplatte nach Anspruch 1 oder 2, **dadurch gekennzeichnet, daß** die Bleche (4) nur an der gemeinsamen Berührungsfläche verklebt sind.

7. Mehrschichtverbundplatte nach Anspruch 1 oder 2, **dadurch gekennzeichnet, daß** die Bleche (4) und der gesamte verbleibende Hohlraum der Zwischenlage durch Klebemasse ausgefüllt ist.

8. Verfahren zur Umformung einer Mehrschichtverbundplatte nach einem der vorhergehenden Ansprüche 1 bis 7,
**dadurch gekennzeichnet,**
**dass** der thermisch aushärtbare aufschäumende Kleber bei der Umformung teilweise thermisch ausgehärtet wird.

9. Verfahren zur Umformung einer Mehrschichtverbundplatte nach einem der vorhergehenden Ansprüche 1 bis 7,
**dadurch gekennzeichnet,**
**dass** der thermisch aushärtbare aufschäumende Kleber erst nach dem Umformvorgang der Mehrschichtverbundplatte durch eine weitere thermische Behandlung vollständig ausgehärtet wird.

## Claims

1. Multilayer composite plate which is constructed from two metal panels which are adhesively bonded to one another and are formed from perforated metal sheets (4), wherein
- the perforations in adjacent metal sheets (4) do not lie above one another or overlap one another,
- a heat-curable, foaming adhesive is located between the plates,
- and the multilayer composite plate is deformable.

2. Multilayer composite plate which comprises more than two outer metal panels as cover plate (1) and baseplate (2), which are connected via an intermediate layer (3), wherein
- the intermediate layer (3) is constructed from perforated metal sheets (4),
- the cover plate (1) and baseplate (2) are perforated or unperforated, with the perforations in the adjacent metal sheets not lying above one another or not overlapping one another,
- a heat-curable, foaming adhesive is located between the plates,
- and the multilayer composite plate is deformable.

3. Multilayer composite plate according to Claim 1 or 2, **characterized in that** the perforations in the metal sheets (4) are circular, oval or polygonal in form.

4. Multilayer composite plate according to Claim 1 or 2, **characterized in that** the foaming adhesive is partially cured.

5. Multilayer composite plate according to Claim 1, 2, 3 or 4, **characterized in that** the perforations preferably form between 40 and 65% of the surface area of a metal sheet (4).

6. Multilayer composite plate according to Claim 1 or 2, **characterized in that** the metal sheets (4) are adhesively bonded only at the common contact surface.

7. Multilayer composite plate according to Claim 1 or 2, **characterized in that** the metal sheets (4) and the entire remaining cavity of the intermediate layer is filled by adhesive compound.

8. Method for deforming a multilayer composite plate according to one of the preceding Claims 1 to 7, **characterized in that** the heat-curable, foaming adhesive is partially heat-cured during the deformation.

9. Method for deforming a multilayer composite plate according to one of the preceding Claims 1 to 7, **characterized in that** the heat-curable, foaming adhesive is only completely cured after the deformation operation has been performed on the multilayer composite plate, by means of a further heat treatment.

## Revendications

1. Plaque composite multicouche, qui est constituée de deux panneaux métalliques en tôles perforées (4) collés l'un à l'autre, dans laquelle
- les trous de tôles voisines (4) ne sont pas superposés ou ne se chevauchent pas,
- un adhésif expansible à durcissement thermique se trouve entre les panneaux
- et la plaque composite multicouche est déformable.

2. Plaque composite multicouche, qui se compose de plus de deux panneaux métalliques extérieurs formant panneaux de recouvrement (1) et de fond (2), qui sont assemblés par une couche intermédiaire (3), dans laquelle
- la couche intermédiaire (3) est constituée de tôles perforées (4),
- les plaques de recouvrement (1) et de fond (2) sont perforées ou non perforées, les trous des tôles voisines n'étant pas superposés ou ne se chevauchant pas,
- un adhésif expansible à durcissement thermique se trouve entre les plaques,
- et la plaque composite multicouche est déformable.

3. Plaque composite multicouche selon la revendication 1 ou 2, **caractérisée en ce que** les trous des tôles (4) possèdent une forme ronde, ovale ou polygonale.

4. Plaque composite multicouche selon la revendication 1 ou 2, **caractérisée en ce que** l'adhésif expansible est partiellement durci.

5. Plaque composite multicouche selon la revendication 1, 2, 3 ou 4, **caractérisée en ce que** la part de surface des trous d'une tôle (4) vaut de préférence entre 40 et 65%.

6. Plaque composite multicouche selon la revendication 1 ou 2, **caractérisée en ce que** les tôles (4) ne sont collées que dans la surface de contact commune.

7. Plaque composite multicouche selon la revendication 1 ou 2, **caractérisée en ce que** les tôles (4) et tout le volume creux restant de la couche intermédiaire sont remplis de la masse adhésive.

8. Procédé de formage d'une plaque composite multicouche selon l'une quelconque des revendications précédentes 1 à 7, **caractérisé en ce que** l'adhésif expansible à durcissement thermique est partiellement durci thermiquement lors du formage.

9. Procédé de formage d'une plaque composite multicouche selon l'une quelconque des revendications précédentes 1 à 7, **caractérisé en ce que** l'adhésif expansible à durcissement thermique n'est durci entièrement par un autre traitement thermique qu'après l'opération de formage de la plaque composite multicouche.
